# EUROPEAN PATENT APPLICATION

(11) **EP 0 663 163 A1**
(43) Date of publication of application: **19.07.1995**
(21) Application number: 95300236.7
(22) Date of filing: 16.01.1995
(51) Int. Cl.: A47B 9/20

(54) **Furniture assembly and a locking mechanism**

(30) Priority: 17.01.1994 GB 9400810
(71) Applicant: ESSELTE DYMO N.V., B-2700 St. Niklaas (BE)
(72) Inventor: Warbrick, Raymond Griffith James, SF-24240 Salo (FI); Carlsen, Jan, Walton on Thames, Surrey KT12 2YE (GB)
(74) Representative: Driver, Virginia Rozanne

(57) **Abstract**

A locking mechanism for use in a furniture assembly has a locking member (40). The locking member has a locking part with opposed surfaces (44) tapering from a base part (46) of a predetermined length (1) to a top part (48). Each surface (44) has a width (w) in the direction perpendicular to the direction of taper. A handle (50) is fixed to the top part (48). The locking mechanism also has an elongate channel (18) with a tapered section (24) matched to the tapered surfaces and an upper opening of a width to accommodate the width of the locking part. The locking member (40) is inserted into the channel (18) with its length orientated lengthwise of the channel (18) and then rotated to cause the tapered surfaces (44) to engage the tapered section of the channel (18) in an interference fit thereby providing a secure lock.

## Description

The present invention relates to a furniture assembly and a locking mechanism therefor.

The present invention seeks to provide a range of "knock-down" furniture which is relatively cheap to manufacture, aesthetically pleasing and which can be easily assembled without the use of tools and without the application of large amounts of force.

In particular, the invention seeks to overcome the problems with existing furniture of conventional steel-tube construction and screw-on assembly.

According to the present invention in one aspect there is provided a locking mechanism comprising a locking member having a locking part with opposed surfaces tapering from a base part of a predetermined length to a top part, each surface having a width in the direction perpendicular to the direction of taper, and a handle fixed to the top part; and a channel member having an elongate channel with a tapered section matched to the tapered surfaces and an upper opening of a width to accommodate the width of the locking part, whereby the locking member is inserted into the channel with its length orientated lengthwise of the channel and then rotated to cause the tapered surfaces to engage the tapered section of the channel in an interference fit thereby providing a secure lock.

Preferably, the tapered surfaces of the locking member and tapered section of the channel member are of dove-tail form. The channel member is preferably formed from rolled sheet steel and is intended to form the leg of an item of furniture, such as a table. Rolling allows an unusual and attractive leg profile to be economically produced in quantity. The rolling process also allows holes to be punched in the base of the channel, and the leg profile to be cut to length as part of the rolling process. Rolling of sheet steel is known and the technique is therefore not described further herein.

The locking mechanism is preferably used in an assembly which also includes an inner member which incorporates tapered section slots to allow sliding movement between the inner member and the channel member. The channel member can have four elongate dove-tail channels. In that case, the inner member will have two appropriately shaped slots, each slot accommodating two channels to allow sliding movement. The slots on the inner member may be dovetail or rectangular in section. Where the channel member and inner member are to constitute the leg of an item of furniture such as a table, height adjustment is allowed by providing the inner member with a plurality of apertures spaced lengthwise of the inner member and aligned with apertures in the channel member. The apertures in the inner member can be elongate slanted holes. To fix the relative location of the inner member and the channel member and thereby fix the height, a pin passes through a selected hole in the channel member and a selected aperture in the inner member to hold the channel member against downward movement on the inner member. The provision of elongated slanted holes on the inner member causes a wedge effect when the leg is loaded. This results in a rigid leg assembly under load, and yet a negative load releases the assembly and allows the channel member and inner member to slide easily for adjustment.

The pin can be provided on the locking member itself. It can be constituted by a square section steel rod held in a square section hole formed in the base part of the locking member.

The present invention also provides a kit of parts for making a table comprising:
a plurality of locking members, each having opposed surfaces tapering from a base part of a predetermined length to a top part, each surface having a width in the direction perpendicular to the direction of taper, and a handle fixed to the top part;
a support structure including two upstanding channel members, each having an elongate channel with a tapered section matched to the tapered surfaces of the locking member and an upper opening of a width to accommodate the width of the locking part, whereby the locking member is inserted into the channel with its length orientated lengthwise of the channel and then rotated to cause the tapered surfaces to engage the tapered section of the channel thereby providing a secure lock;
two support brackets each having an aperture for securing it to a respective channel member using a respective locking member and a surface for supporting a work surface; and
a work surface securable to the support brackets.

The support structure preferably comprises respective horizontal supports, each with an upstanding channel member secured to it. For a kit of parts for making a table having legs of adjustable height, the support structure can comprise two horizontal supports, each with a respective upstanding inner member secured to it with associated respective channel members slidable over the inner members.

The kit can include a centre-frame member adapted to extend crosswise between the upstanding channel members and having apertures for securing to the upstanding channel members. The centre-frame member can be of pressed steel construction and can incorporate a concealed cable management channel.

The support brackets can each comprise a tab for engaging an aperture in the channel member for secure fixing. Alternatively, the locking member can have a protrusion from its base part to perform this function.

The horizontal support preferably is of open section and includes a moulded end plug with a tapered hole for fixing feet or castors.

The present invention also provides a fixing for securing an upper member to a lower member having an aperture therein by a push-down snap action, the fixing having an upper portion enabling it to be securely fixed into the underside of the upper member and a lower portion having a stalk and at least one resilient finger mounted to the stalk which has sufficient resilience to be pushed towards the stalk for insertion into the aperture when the upper member is pushed down against the lower member and to move outwardly to rest against the rim of the aperture after insertion.

The upper portion can take the form of a "christmas tree" shape so that it can be pushed into the underside of the upper member and will hold fast. Alternatively, the upper portion can be threaded to be secured into a correspondingly threaded aperture in the underside of the upper member. Any other suitable fixing portion could be used.

Preferably, the resilient finger has a tongue at its end which engages the rim of the aperture while the remainder of the finger rests against the rim. Alternatively a plurality of lugs may be provided between the upper and lower portions of the fixing for engaging the rim of the aperture.

The lower portion of the fixing can be in the form of a bayonet fixing. Thus, the lower portion can be symmetrical, with two resilient fingers on either side of a central stalk.

The work surface can be made of wood and can incorporate one or more of the fixings for securing to the support surfaces of the support brackets through apertures provided thereon. The fixings permit the work surface to be secured to the support brackets by a simple push-down snap action. If required, the work surface can be released by compressing the resilient fingers and pushing the fixing back through the hole in the support surface of the support bracket. A special tool can be provided for compressing the resilient fingers to allow the fixing to be pushed back through the hole.

The kit can include a plastic extruded profile which snaps onto the rear of the channel member and serves to guide cables. The profile is of open design to facilitate easy insertion and removal of cables.

The kit can also include plastic strips intended to seal any unused channels of the channel member.

For a better understanding of the present invention and to show how the same may be carried into effect reference will now be made by way of example to the accompanying drawings, in which:
Figure 1 is an example of a table constructed using a kit of parts incorporating the locking mechanism;
Figure 2 is another example of a table for which the height of the legs is adjustable;
Figure 3 is a side view of the table of Figure 2;
Figure 4 is an enlarged view of the part ringed IV in Figure 3 showing how the height can be adjusted;
Figure 5 is a section through a channel member with an inner member received in it and in the unlocked position;
Figure 6 is the same view as Figure 5 but in a locked position;
Figure 7a is a side view of a support bracket secured to a channel member;
Figure 7b is a view from the front of Figure 7a;
Figure 8a is an end view of the locking member;
Figure 8b is a side view of the locking member;
Figure 8c shows the locking member in an aperture of a support bracket or the like;
Figures 9a to 9c are side views of the top location fixing demonstrating its use;
Figure 10 is an alternative embodiment of a top location fixing;
Figure 11 is a section through a channel member to which is secured a plastic cable guide;
Figure 12 is a section through a plastic sealing strip;
Figure 13 is an example of a printer table;
Figures 14a and 14b show side views of a further alternative top location fixing; and
Figure 15 shows another alternative top location fixing.

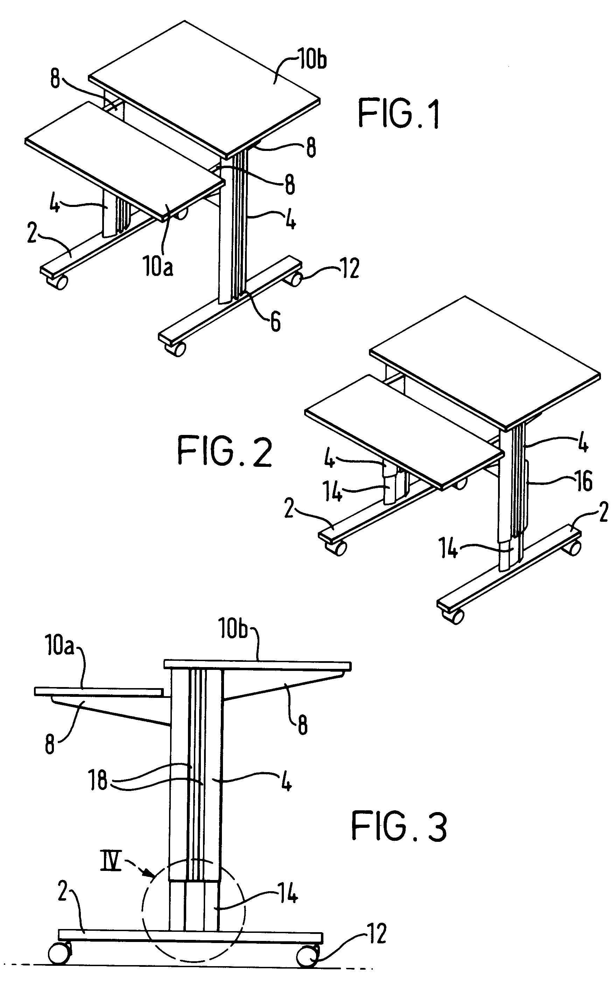

Figure 1 is a perspective view of a table constructed using a kit in accordance with the present invention. The table comprises a support structure which includes two horizontal support members 2 to each of which is secured an upstanding channel member 4. Securing at point 6 is done by welding or some other permanent method. Support brackets 8 are fixed to the channel members 4 using the locking mechanism to be described. Two of the support brackets 8 support a first work surface 10a and two more of the support brackets 8 support a second work surface 10b. Reference numeral 12 denotes castors. In Figure 1, the channel members 4 are of a predetermined length set according to the desired height of the table.

Figure 2 illustrates a table similar to that of Figure 1 but on which the height of the legs can be adjusted. To that end, each of the horizontal support members 2 have secured to it an inner upstanding member 14. The channel members 4 are then slidably located over the inner members 14. In other respects the table of Figure 2 is the same as that of Figure 1. Figure 2 also illustrates however a plastic cable guide 16 snapped onto the channel member 4.

Figure 3 is a side view of the table of Figure 2. This shows more clearly the relationship between the support brackets 8 and the respective work surfaces 10a, 10b. As readily seen in Figure 3, the upstanding channel member 4 has two elongate channels 18 extending lengthwise. Two similar channels (not shown) are provided on the inner side of the channel member 4. One of the support brackets is secured within one of the channels and the other support bracket is fixed within the other channel. The manner of fixing is described later.

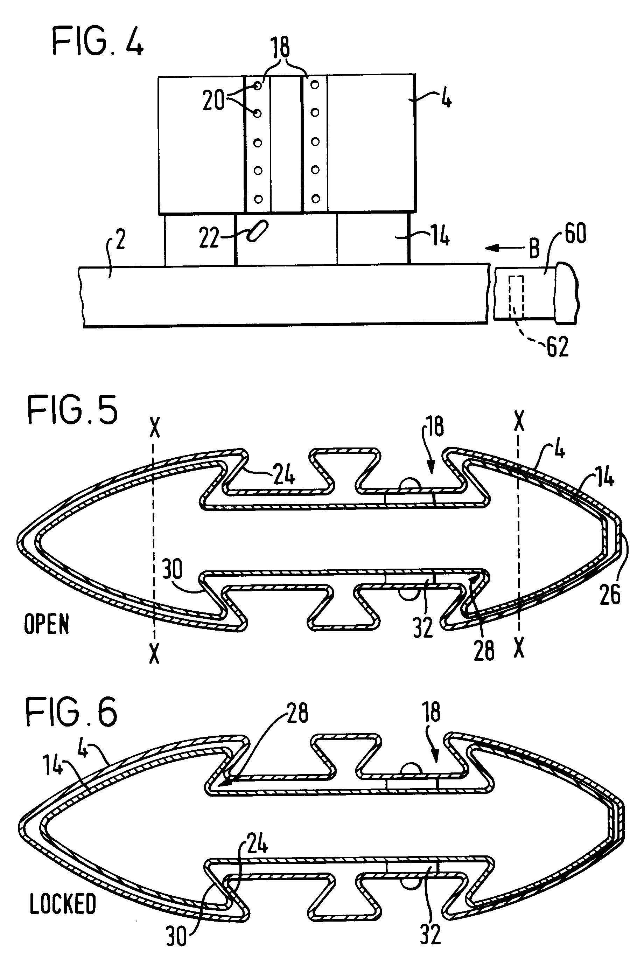

Figure 4 is an enlarged view of the encircled part marked IV in Figure 3. This shows more clearly how the height of a table leg can be adjusted. Each of the channels 18 of the channel member 4 is provided with a plurality of spaced apertures 20 along its length. The apertures are shown having a circular section. The inner member 14 is likewise provided with a plurality of apertures spaced along its length, one aperture 22 of which can be seen in Figure 4. The aperture 22 is shown as an elongate slanted aperture. To secure the channel member and the inner member at a predetermined relative location, a pin- is inserted through the aperture 20 and corresponding aperture 22 to fix the members. The elongate slanted apertures 22 in the inner member provide a wedge effect when the leg is loaded. The spacing between the apertures 20 in the channel can differ from that between the aperture 22 in the inner member to permit finer height adjustments to be made.

Figure 4 also shows detail at the end of the horizontal support member, which is of hollow approximately rectangular section. Reference numeral 60 denotes a moulded plastic end plug having a blind hole 62. In use, the plug is inserted into the end of the support member and the aperture 62 is aligned with a hole (not visible in Figure 4) in the base of the support member 2 so that feet or castors can be pushed in.

Reference is now made to Figure 5 to describe the channel member and the inner member in more detail. The channel member 4 is formed by rolling lmm sheet steel to provide four channels 18 each having a dove-tail section with tapered side walls 24. Two such channels 18 are provided on each face of the channel member. After rolling, the sheet steel is welded at 26 to provide a closed section channel member. The inner member 14 has a section which is shaped to match the section of the channel member 4 and to be slidably received within it. It is likewise formed by rolling and welding. It has two slots 28 with tapered side walls 30 to accommodate the channels 18 of the channel member 4. As will readily be understood from Figure 5, a single slot 28 of the inner member 14 accommodates two channels 18 of the channel member 4. The particular design of the channel member 4 outside the dotted line X-X can be selected according to particular aesthetic requiremments as these parts are not dictated in any way by the function of the channel member. Reference numeral 32 denotes a plastic stud which is inserted through one of the apertures 20 of the channel member to provide a washer between the inner member and the channel member. This assists spacing of the members during sliding and also assists in stabilising the inner member 14 and the channel member 4 when they are secured at a predetermined location. Figure 5 shows the inner member and the channel member unlocked for sliding movement. Figure 6 shows the inner member 14 and the channel member 4 when they have been fixed together in the manner illustrated in Figure 3 at a predetermined relative location. At that time, the tapered edge 30 of the inner member engages the tapered edge 24 of the channel member.

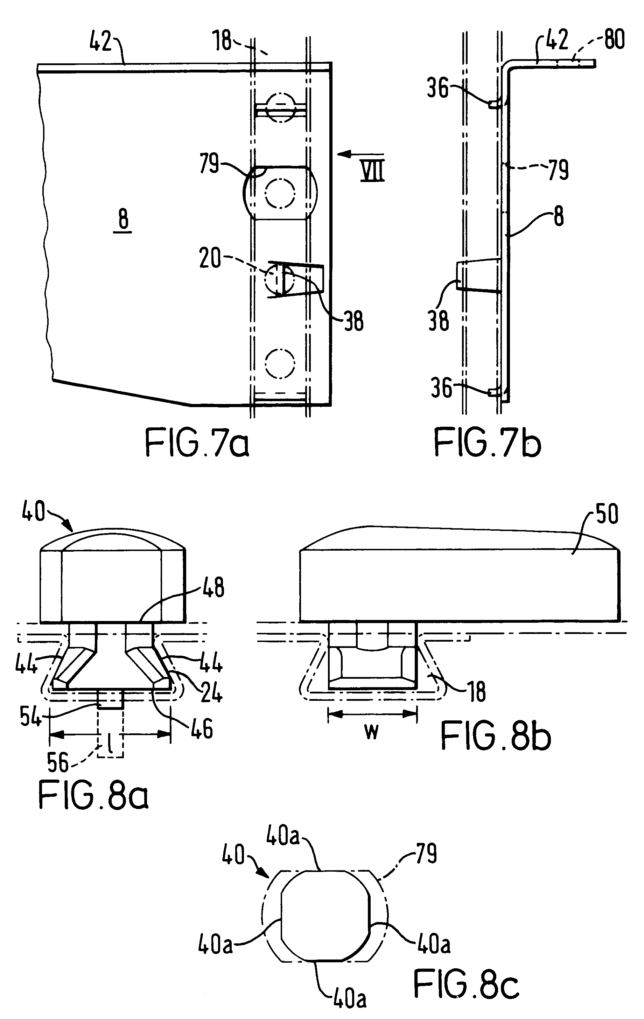

Figures 7a and 7b show more clearly how the support bracket 8 is secured to the channel member. Figure 7a is a view looking at the support bracket 8 with an aperture 79 in its right hand edge placed over the channel 18 of the channel member. Figure 7b is a view taken in the direction of arrow VII. The support member has two small locating protrusions 36 on its rear surface. It also has a tab or tongue 38 which is long enough to extend the depth of the channel 18 through an aperture 20 and serves to locate the support bracket 8 at a predetermined location on the channel member 4. The support bracket 8 can then be locked in this location using the locking member 40 which will be described in more detail hereinafter. The support bracket 8 has a support surface 42 which is provided with one or more apertures 80 for securing the work surface 10a or 10b to it in a manner which will be described afterwards.

Reference will now be made to Figures 8a to 8c to describe the locking mechanism of the present invention. The locking member 40 has opposed surfaces 44 tapering from a base part 46 of a predetermined length 1 to a top part 48. The surfaces 44 have a width w. The locking member 40 has a handle 50 secured to the top part 48. The locking member is preferably made as an integral single piece by injection moulding. The width w of the base part 46 matches the width of the open part of the channel 18 of the channel member. This enables the locking member to be inserted into the channel member in the orientation shown in Figure 8b. The locking member can then be rotated to bring it into the orientation shown in Figure 8a where the tapered surfaces 44 engage the dove-tail section of the channel 18 and thereby prevent movement of the locking member 40 out of the channel 18. Thus, a secure lock is provided. The tapered surfaces 44 are preferably an interference fit with the tapered surfaces 24 of the channel 18.

Thus, the locking action is created only by turning the locking member from an "open" position in which it is located but not locked and a "closed" position in which it snugly and securely fits the channel. There is no need to move the locking member along or transversely of the channel. The handle of the locking member is designed to easily generate the required locking movement.

The locking member has several applications. In the first place, it can be used to secure support brackets or other elements of a furniture item to the channel members. For that purpose, the support brackets or other elements have apertures 79 shaped to receive the base part of a locking member and to allow the locking member to be rotated between the locked and unlocked positions. For securement, the support bracket or other element is then placed with the aperture over the channel, the locking member is inserted and oriented in the unlocked position to enable the position of the support bracket relative to the channel to be adjusted. Figure 8c illustrates how the locking member sits in the elongate aperture 79, the base being substantially circular but with squared off edges 40a keeping the locking member in place while locating the bracket in the channel. When the correct position has been reached, the locking member is turned to its locked position thereby securely locking the support bracket or other element to the channel member. For the support bracket of Figures 7a and 7b, the tab or tongue 38 assists in locating the support bracket at the correct location in the channel member before locking takes place. It also then serves as an additional safeguard against the bracket moving under downward forces. Such a safeguard can also be provided by a pin extending from the base part of the locking member as shown in Figure 8a by reference numeral 54. The pin 54 would then be received within an aperture 20 of the channel 18 when the locking member is inserted to lock the support bracket or other element to the channel member. The extent of the pin 54 is such as to extend through an aperture 20 in the channel member 4 but not so far as to impede sliding movement of the channel member 4 over the inner member 14 when such sliding movement is required.

An alternative embodiment of the locking member can be provided with a pin which is illustrated in Figure 8a by a dotted line and by reference numeral 56. This pin can be used as the pin for securing the channel member to the inner member at a fixed relative location for adjusting the height of a leg. Then, the locking member is used to firmly locate the pin at the desired location in the apertures 20 and 22 (as discussed above with reference to Figure 4). Preferably the pin 56 is of square section. It can be incorporated into the locking member by insertion into a square section hole in the base part 46 of the locking member 40.

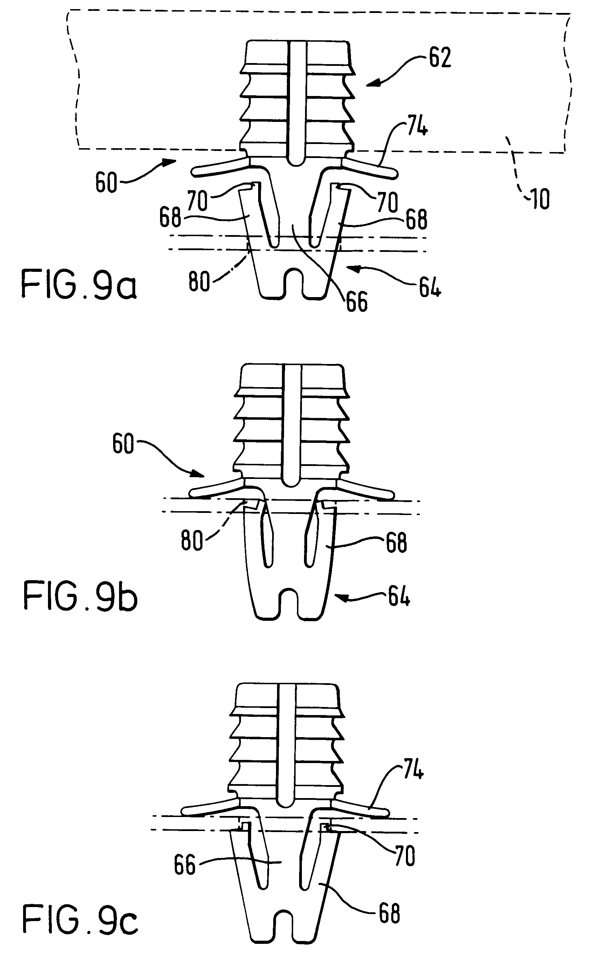

Figure 9a to 9c show a fixing which is used to secure the work surfaces 10a, 10b to the support brackets 8. The fixing 60 has an upper part in the form of a "christmas tree" which is used to embed the fixing in the work surface 10 and a lower part in the form of a bayonet type fixing. The bayonet type fixing 64 has a central stalk 66 and a pair of resilient fingers 68 which can be pushed inwards towards the stalk as shown in Figure 9b. Reference numeral 80 denotes an aperture in a support surface of the support bracket 8. Each finger has at its end an integral tongue 70, each tongue extending parallel to the axis and engaging the straight edges of the aperture 80. This assists in improving stability against rotation. To fix the work surface 10 to the support bracket 8, the bayonet part 64 of the fixing is pushed downwards through the aperture 80, during which the resilient fingers 68 are pushed towards the central stalk 66 as shown in Figure 9b. As pressure continues to be exerted, the resilient fingers snap outwardly to rest on the rim of the aperture 80, with the tongues 70 engaging the rim of the aperture. This is shown in Figure 9c. Resilient support elements 74 are provided between the christmas tree portion 62 and the bayonet portion 64, these parts resting on the upper surface of the support bracket.

The fixing can be injection moulded as a single integral part, and is factory fitted into blind holes in the underside of the work surface 10. The work surface 10 can be released from the support surface of the support bracket by forcing the resilient finger 68 inwardly using a suitable tool to allow the fixing to be withdrawn through the aperture 80 in the direction opposite to that to which it was inserted.

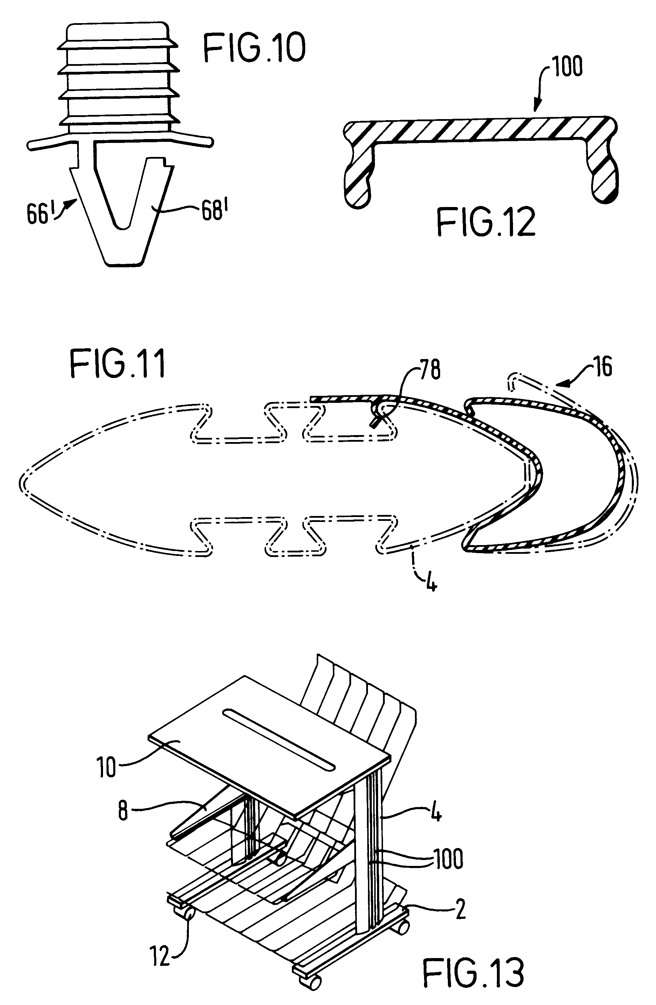

Figure 10 illustrates an alternative fixing with only one resilient finger 68' secured to a stalk 66'. Otherwise the principle of operation is the same.

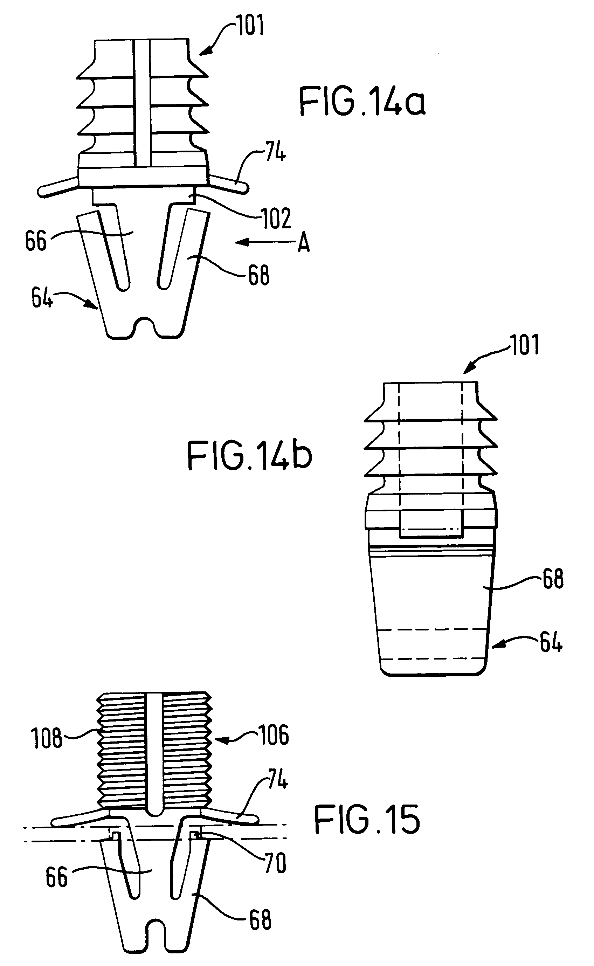

Figures 14a and b show an alternative fixing 101 similar to that shown in Figures 9a, 9b and 9c and like reference numerals are used indicate like parts. The fixing 101 shown in Figures 14a and b differs from the fixing 60 of Figures 9a, 9b and 9c in the following respects. Lugs 102 are provided above the resilient fingers 68 to permit the fixing to be centred in the aperture for the bayonet part 64 of the fixing. These lugs 102 can replace the tongues 70 of the fixing 60 shown in Figures 9a, 9b and 9c. The lugs 102 have the advantage that removal of the bayonet part 64 of the fixing from its aperture is made easier. Additionally the fixing of Figures 14a and 14b differs from that shown in Figures 9a, 9b and 9c in that the bayonet part 64 of the fixing is, when viewed from the direction of arrow A in Figure 14a, generally tapered. This can be clearly seen from Figure 14b. This tapering facilitates location of the bayonet part 64 of the fixing in the aperture. The operation of this fixing 61 is generally the same as that shown in Figures 9a, 9b and 9c.

A further fixing 106 is shown in Figure 15. This fixing 106 is similar to that shown in Figures 9a, 9b and 9c. However the "christmas tree" portion 62 of Figures 9a, 9b and 9c is replaced by a screw threaded portion 108. This has the advantage that the fixing can be easily fitted into threaded holes in the underside of the work surface 10. This can for example be done by the assembler of the furniture. Once again the principle of operation of the bayonet part is the same. It will be appreciated that the "christmas tree" portions of the embodiments of Figures 10 and Figures 14a and b can also be replaced by screw threaded portions.

Referring back to Figure 2, reference numeral 16 denoted a snap-on cable guide. This is shown in more detail in section in Figure 11. The cable guide 16 can be snapped onto the rounded profile of the channel member 4 and is provided with a piece for engaging the channel 18. The channel guide 16 is of open section as denoted by the dotted line to allow cables to be inserted.

Figure 12 is a section through a sealing strip 100 made of plastic material and intended to cover unused channels to improve appearance. This is shown for example in Figure 13. Profiled side edges allow the strip 100 to be snapped into the channel 18.

It is possible using a limited number of the basic components described above to create a wide range of different products, all using the same construction techniques. Thus, different combinations of the same stock components can be used to construct terminal tables, work desks, work stations, printer stands etc. For example, Figure 13 shows a printer table constructed using the same stock components and additionally provided with wire trays for paper. This example is illustrated to shown the dual function of the support brackets. In Figure 13, the support brackets are attached to the channel members with the support surfaces acting as shelf supports rather than as supports for work surfaces.

As a further alternative, the support bracket can be formed with an elongate slot in place of the aperture 80 to enable it to slide over the bayonet fixings so that its position can be adjusted after assembly. The tongues 70 or lugs 102 engage the edges of the slot to assist this movement.

## Claims

1. A locking mechanism comprising a locking member having a locking part with opposed surfaces tapering from a base part of a predetermined length to a top part, each surface having a width in the direction perpendicular to the direction of taper, and a handle fixed to the top part; and a channel member having an elongate channel with a tapered section matched to the tapered surfaces and an upper opening of a width to accommodate the width of the locking part, whereby the locking member is inserted into the channel with its length orientated lengthwise of the channel and then rotated to cause the tapered surfaces to engage the tapered section of the channel in an interference fit thereby providing a secure lock.

2. A locking mechanism as claimed in claim 1, wherein the tapered surfaces of the locking member and tapered sections of the channel member are of dove-tail form.

3. A locking mechanism as claimed in claim 1 or 2, wherein the channel member is formed of rolled sheet metal.

4. A locking mechanism as claimed in claim 1, 2 or 3, wherein the handle and the locking part of the locking member are moulded as an integral piece.

5. A locking mechanism as claimed in any preceding claim, wherein the channel has a base provided with a plurality of apertures spaced lengthwise of the channel.

6. A locking mechanism as claimed in claim 5, wherein the locking member comprises a protrusion extending from the base part and adapted to extend through one of said apertures.

7. A locking mechanism as claimed in claim 6, wherein the protrusion is a square-section metal rod.

8. A locking mechanism as claimed in claim 7, wherein the rod is held in a square section hole formed in the base part of the locking member.

9. A locking mechanism as claimed in any preceding claim, wherein the channel member forms a support leg for a table or the like.

10. A locking mechanism as claimed in any preceding claim, in which the channel member is hollow and defines the channel in its outwardly facing surface.

11. An assembly including a locking mechanism as claimed in any of claims 1 to 10 and which further comprises an inner member shaped to be slidably received within the channel member.

12. An assembly as claimed in claim 11, wherein the inner member has a plurality of apertures spaced along its length and aligned with the channel.

13. An assembly as claimed in claim 12, wherein the apertures in the inner member are elongate and angled with respect to the length of the inner member.

14. An assembly as claimed in claim 12 or 13 when using a locking mechanism of any one of claims 6 to 8, wherein the protrusion on the locking member extends only just through the apertures in the channel member but does not impede sliding movement between the channel member and the inner member.

15. An assembly as claimed in claim 12 or 13 when using a locking mechanism of any one of claims 6 to 8, wherein the protrusion on the locking member is long enough to extend through apertures in both the channel member and the inner member whereby the channel member and the inner member can be fixed at a desired relative location.

16. An assembly as claimed in any of claims 11 to 14, wherein there is a spacer located between the inner member and the channel member to facilitate sliding and fixing.

17. A locking mechanism as claimed in any of claims 1 to 10 or an assembly as claimed in any one of claims 11 to 16, wherein the channel member is secured to a horizontal support at one end thereof.

18. An assembly as claimed in any of claims 11 to 16, wherein the inner member is secured to a horizontal support at one end thereof.

19. A locking mechanism according to any of claims 1 to 10 or an assembly according to one of claims 11 to 18, wherein the channel member has at least two such elongate channels extending in parallel along its length.

20. A kit of parts for making a table comprising:
a plurality of locking members, each having opposed surfaces tapering from a base part of a predetermined length to a top part, each surface having a width in the direction perpendicular to the direction of taper, and a handle fixed to the top part;
a support structure including two upstanding channel members, each having an elongate channel with a tapered section matched to the tapered surfaces of the locking member and an upper opening of a width to accommodate the width of the locking part, whereby the locking member is inserted into the channel with its length orientated lengthwise of the channel and then rotated to cause the tapered surfaces to engage the tapered section of the channel thereby providing a secure lock;
two support brackets each having an aperture for securing it to a respective channel member using a respective locking member and a surface for supporting a work surface; and
a work surface securable to the support brackets.

21. A kit according to claim 20, wherein the support structure comprises two horizontal support members each having secured thereto a respective upstanding channel member.

22. A kit according to claim 20, wherein the support structure comprises two horizontal support members, each having secured thereto an upstanding inner member with a respective channel member slidable thereover.

23. A kit according to any of claims 20 to 22, which comprises a cross member securable to the upstanding channel members and having a guide for cables.

24. A kit according to any of claims 20 to 23, wherein each support bracket has a tab for engaging an aperture in the channel member for locating it.

25. A kit according to claim 21 or 22, wherein the horizontal support member has an open section and is provided with a moulded end plug having a tapered hole for fixing feet or castors.

26. A kit according to any of claims 20 to 25, wherein the work surface has a plurality of top location fixings on its underside which engage apertures in the support surfaces of the support brackets by a push-down snap action.

27. A kit according to any of claims 20 to 26 which includes a plastic cable guide which can be snapped onto the exterior surface of the channel member and opened to allow passage of cables.

28. A kit according to claim 26, wherein each fixing has a christmas tree upper portion fixed into the underside of the work surface and a lower portion having a stalk and a resilient finger mounted to the stalk which has sufficient resilience to be pushed towards the stalk for insertion into the aperture when the work surface is pushed down against the support surface of the support bracket and to move outwardly to rest against the rim of the aperture after insertion.

29. A locking member having a locking part with opposed surfaces tapering from a base part of a predetermined length to a top part, each surface having a width in the direction perpendicular to the direction of taper and sized to be received by opposed engaging surfaces, and a handle secured to the top part, the length being greater than the width and designed to engage the engaging surfaces when the locking member is rotated from an insertion to a locking position.

30. A fixing for securing an upper member to a lower member having an aperture therein by a push-down snap action, the fixing having an upper portion enabling it to be securely fixed into the underside of the upper member and a lower portion having a stalk and at least one resilient finger mounted to the stalk which has sufficient resilience to be pushed towards the stalk for insertion into the aperture when the upper member is pushed down against the lower member and to move outwardly to rest against the rim of the aperture after insertion.

31. A fixing as claimed in claim 30, wherein the lower portion is in the form of a bayonet fixing.

32. A fixing as claimed in claim 30 or 31, wherein the resilient finger has a tongue at its end which engages the rim of the aperture while the remainder of the finger rests against the rim.

33. A work surface having in its underside at least one fixing according to claims 30, 31 or 32.

34. A work surface according to claim 33 which is made of wood.
